Europäisches Patentamt

European Patent Office

Office européen des brevets

(11) Numéro de publication: **0 332 502**
**A2**

## (12) DEMANDE DE BREVET EUROPEEN

(21) Numéro de dépôt: **89400562.8**

(22) Date de dépôt: **28.02.89**

(51) Int. Cl.⁴: **A 01 D 87/12**
**B 66 F 9/18**

(30) Priorité: **03.03.88 FR 8802727**

(43) Date de publication de la demande:
**13.09.89 Bulletin 89/37**

(84) Etats contractants désignés:
**AT BE CH DE ES GB GR IT LI LU NL SE**

(71) Demandeur: **Mailleux, Louis Marie Joseph**
**19 rue de Rennes**
**F-35690 Acigné (FR)**

**Mailleux, André Ange**
**19 rue de Rennes**
**F-35690 Acigné (FR)**

(72) Inventeur: **Mailleux, Louis Marie Joseph**
**19 rue de Rennes**
**F-35690 Acigné (FR)**

**Mailleux, André Ange**
**19 rue de Rennes**
**F-35690 Acigné (FR)**

(74) Mandataire: **Madeuf, René Louis et al**
**Cabinet Madeuf 3, Avenue Bugeaud**
**F-75116 Paris (FR)**

(54) Dispositif de retournement et gerbage d'objets de forme cylindrique tels que des balles de fourrage, des fûts ou analogues.

(57) Dispositif de retournement et gerbage d'objets de forme cylindrique tels que des balles de fourrage, des fûts ou analogues caractérisé en ce que ledit dispositif de gerbage est porté par une pièce de travail (7) normalement maintenue dans une position d'assiette sensiblement constante lorsqu'elle est élevée respectivement abaissée par un ensemble élévateur (3) et pouvant être inclinée d'au moins 90° par des moyens de commande 11, 12, 13, et en ce que la pièce de travail (7) supporte un bâti (14) transversalement auquel sont disposées des pinces fixes (15) et au voisinage du pied dequelles sont articulées des pinces mobiles (17) reliées à des organes d'actionnement (19), lesdites pinces fixes (15) et mobiles (17) étant conformées en arc de cercle de rayon correspondant sensiblement à celui des balles (22).

FIG. 1

EP 0 332 502 A2

**Description**

**Dispositif de retournement et gerbage d'objets de forme crylindrique tels que des balles de fourrage, des fûts ou analogues.**

La présente invention concerne les dispositifs de gerbage d'objets de forme cylindrique tels que des balles de fourrage, des fûts ou analogues.

L'invention s'applique plus particulièrement au retournement et au gerbage de balles de fourrage enrubannées par un film plastique fragile et délicat à manutentionner dont l'entrée d'oxygène est absolument interdite.

Les machines, qui réalisent les balles de fourrage de forme cylindrique et qui les emballent sous un film plastique alors que le fourrage est fortement comprimé dans le film qui constitue une enveloppe, laissent ces balles reposer au sol sur leurs génératrices cylindriques. Le poids d'une balle de fourrage comprimé est souvent de l'ordre de 5 à 600 kg et il est nécessaire de les saisir au sol, de les faire pivoter de 90° puis de les transporter au lieu de stockage pour qu'elles soient ensuite empilées sur leurs faces planes.

Pour effectuer le travail exposé ci-dessus, il faut prendre grand soin que le film plastique d'emballage ne soit en aucun cas endommagé, notamment percé. Par ailleurs, sur le lieu de stockage, les balles doivent être disposées pour qu'elles soient tangentes les unes aux autres suivant des rangées parallèles, c'est-à-dire que chaque balle est tangente à deux balles disposées suivant des coordonnées rectangulaires.

Il est nécessaire sur le lieu de stockage qu'un nombre aussi grand que possible de balles soient empilées les unes sur les autres et que les balles ainsi posées successivement le soient avec douceur, tout frottement risquant de détériorer le film plastique s'étendant sur les surfaces planes des balles devant être en contact.

Pour soulever et manutentionner des balles cylindriques, il est donc nécessaire que les moyens qui la supportent maintiennent la balle sous une assiette constante quel que soit le niveau que la balle doit occuper dans un empilage.

Pour maintenir une assiette constante à une pièce élévatrice de travail, la technique antérieure a déjà enseigné différents moyens et, en particulier, le brevet français N° 86 04383 déposé le 26 mars 1986 a fait connaître un dispositif chargeur à compensation rapide et blocage pour tracteurs agricoles et analogues dont les enseignements sont avantageusement utilisés dans le dispositif de l'invention.

Par ailleurs, pour effectuer des empilages de balles de grande hauteur, il est possible d'associer aux enseignements du brevet français ci-dessus ceux découlant du brevet français N° 84 16472 déposé le 26 octobre 1984 et décrivant un dispositif élévateur pour chargeurs de tracteurs agricoles qui est tout particulièrement adapté pour être associé au dispositif du brevet français N° 86 04383.

Il est apparu, cependant, que les moyens de manutention décrits notamment dans le brevet français N° 84 16472 ne pouvaient pas être mis en oeuvre lorsque des balles de fourrage emballées sous film plastique ou des fûts en bois ou en métal devaient être manutentionnés. En effet, le brevet français ci-dessus prévoit des moyens tels que des pinces qui pénètrent dans la balle et ces moyens détérioreraient le film plastique et rendraient impossible la prise de fûts ou objets analogues.

L'invention crée un nouveau dispositif qui permet une manutention facile de balles pré-emballées sous film plastique ou d'autres objets de forme générale cylindrique.

Conformément à l'invention, le dispositif de retournement et gerbage d'objets de forme cylindrique tels que des balles de fourrage, des fûts ou analogues dans lequel lesdites balles doivent être empilées sur leur face plane après avoir été relevées alors qu'elles se trouvaient indifféremment reposer sur leurs génératrices cylindriques ou leur face plane, est caractérisé en ce que ledit dispositif de gerbage est porté par une pièce de travail normalement maintenue de façon connue en elle-même dans une position d'assiette sensiblement constante lorsqu'elle est élevée respectivement abaissée par un ensemble élévateur et pouvant être inclinée d'au moins 90° par des moyens de commande, et en ce que la pièce de travail supporte un bâti transversalement auquel sont disposées des pinces fixes et au voisinage du pied dequelles sont articulées des pinces mobiles reliées à des organes d'actionnement, lesdites pinces fixes et mobiles étant conformées en arc de cercle de rayon correspondant sensiblement à celui des balles.

Suivant une autre disposition importante de l'invention, les pinces fixes et mobiles s'étendent sur un arc de cercle d'approximativement 270° et sont calées sur le bâti auquel elles sont reliées pour que leurs extrémités respectives se trouvent distantes des points de tangence de deux balles contiguës disposées selon deux axes de coordonnées rectangulaires.

Diverses autres caractéristiques de l'invention ressortent d'ailleurs de la description détaillée qui suit.

Une forme de réalisation de l'objet de l'invention est représentée, à titre d'exemple non limitatif, au dessin annexé.

La fig. 1 est une élévation latérale du dispositif de gerbage de balles de fourrage et produits analogues réalisé selon l'invention.

La fig. 2 est une élévation partielle du dispositif illustrant deux positions caractéristiques essentielles.

La fig. 3 est une élévation vue sensiblement suivant la ligne III-III de la fig. 2.

La fig. 4 est une élévation partielle vue sensiblement suivant la ligne IV-IV de la fig. 2.

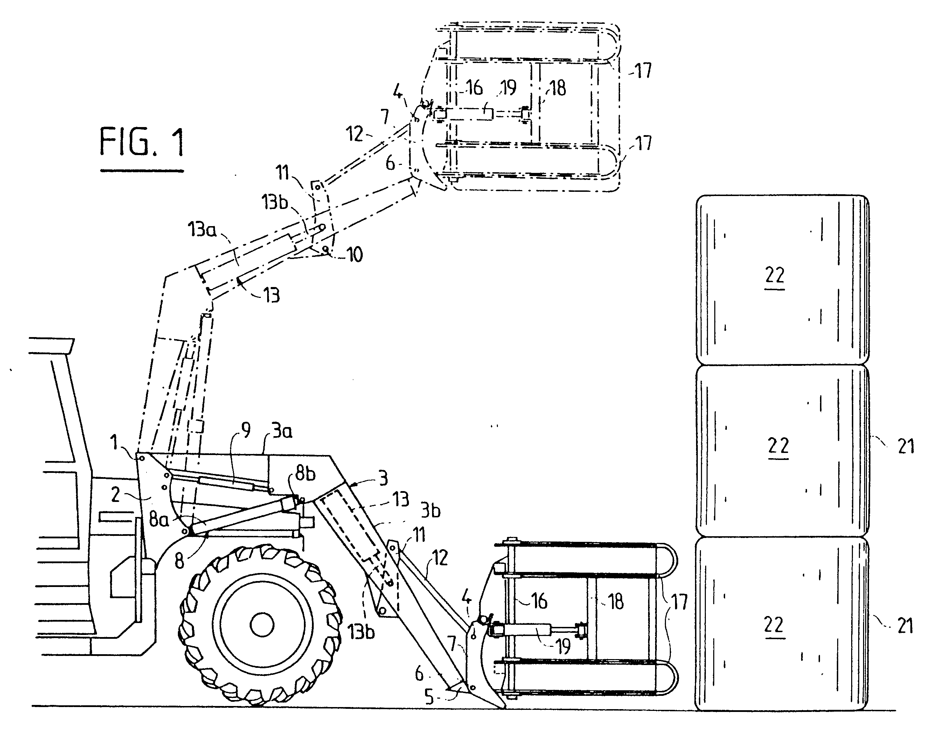

Le dispositif de gerbage illustré au dessin et plus particulièrement à la fig. 1 est représenté monté de manière amovible sur un dispositif de portage, par exemple un tracteur agricole, muni d'axes 1 sur ses côtés latéraux et de deux bâtis ou potences 2 faisant partie d'un dispositif d'attelage du tracteur pour un chargeur décrit dans ce qui suit.

Le chargeur comporte un, de préférence deux brancards 3 constitués par deux bras 3a, 3b formant un angle l'un avec l'autre. L'extrémité du bras 3a est articulée sur l'axe 1 et l'extrémité du bras 3b comporte une chape 5 pour un axe 6 d'une pièce de travail 7 interchangeable qui peut être une benne basculante ou un simple support comme dans l'exemple représenté. Chaque brancard 3 est relié à la potence 2 par un vérin de levage 8 et par un vérin dit de compensation 9. Les bras 3b des brancards supportent un axe 10 d'articulation d'un levier 11 à l'extrémité duquel est articulée la tête d'une bielle 12 dont le pied est articulé sur la pièce de travail 7 par un axe 4 disposé à distance de l'axe 6.

Le levier 11 est commandé par un vérin 13 dénommé dans ce qui suit vérin de pièce de travail.

Le corps 13a du vérin 13 est articulé aux brancards 3 et la tige 13b est articulée au levier 11.

En ce qui concerne les autres vérins, le corps 8a de chaque vérin de levage est articulé à la potence 2 et la tige 8b au brancard 3 correspondant.

Les vérins de compensation 9 ont leur propre corps articulé à la potence 2 et leur tige aux brancards 3.

Les vérins de compensation 9 sont reliés hydrauliquement au vérin 13 de la pièce de travail 7 et présentent des capacités qui sont choisies de façon connue en soi et telles que décrites dans le brevet français N° 86 04383 de façon que la pièce de travail 7 présente une assiette constante, c'est-à-dire ne change pas d'inclinaison lorsque cette pièce est déplacée depuis la position illustrée en trait plein jusqu'à la position illustrée en traits mixtes à la fig. 1, c'est-à-dire lors de l'actionnement des vérins de levage 8.

Il résulte de ce qui précède que la description du brevet français ci-dessus fait partie intégrante de la présente description bien que les moyens permettant de maintenir constante ou sensiblement constante l'assiette de la pièce de travail 7 puissent être réalisés d'autres manières.

De même, la pièce de travail 7 peut ne pas être montée directement à l'extrémité des brancards 3 mais être reliée à ceux-ci par un dispositif élévateur intermédiaire bien connu dans la technique par exemple le dispositif élévateur intermédiaire pour chargeur de tracteur agricole qui est décrit dans le brevet français N° 84 16472.

Le dispositif de gerbage proprement dit comporte la pièce de travail 7 décrite ci-dessus servant au support d'un bâti 14 qui porte un jeu de pinces fixes 15 en forme de croissant s'étendant transversalement entre deux flasques 14a, 14b du bâti 14.

Le bâti 14 supporte, au voisinage du pied des pinces 15 en forme de croissant, un axe 16 qui est désaxé par rapport aux brancards 3, c'est-à-dire que l'axe 16 se trouve au voisinage du flasque latéral 14a du bâti 14. L'axe 16 supporte un jeu de pinces mobiles 17, par exemple deux pinces également en forme de croissant, et qui sont reliées entre elles par une entretoise 18. Un vérin 19 est articulé entre l'entretoise 18, c'est-à-dire entre le jeu de pinces mobiles 17 et la pièce de travail 7 qui comporte avantageusement, à cette fin, une poutre 20 faisant saillie au-delà du flasque 14a du bâti 14.

Les jeux de pinces 15 et 17 sont munis intérieurement de plaques de revêtement 15a, 17a dont la surface est de préférence légèrement rugueuse sans toutefois présenter des aspérités risquant d'endommager un film plastique 21 enveloppant des balles 22, par exemple des balles de fourrage comprimé sous la forme de cylindres.

Le rayon de courbure des jeux de pinces fixes 15, de même que celui des jeux de pinces mobiles est choisi pour correspondre au rayon du cylindre que délimitent les balles 22.

Les jeux de pinces fixes 15 et mobiles 17 sont, de préférence, de même longueur pour s'étendre sur des arcs de cercle équivalents et la somme de leur longueur est choisie pour s'étendre sur un arc de cercle d'environ 270°.

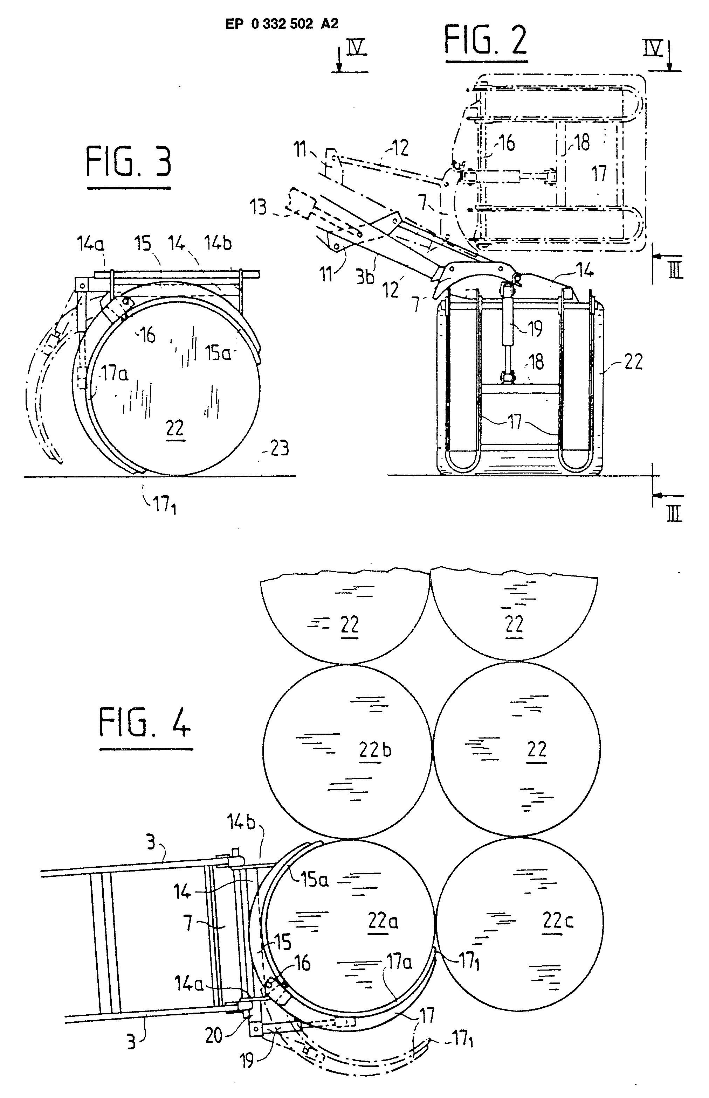

La position de l'axe d'articulation 16 du jeu de pinces mobiles 17 est, en outre, choisie pour que l'extrémité $17_1$ ne puisse pas venir en contact avec le sol 23 comme montré par la fig. 3 lorsqu'une balle est posée sur ledit sol et repose, par conséquent, sur ses génératrices cylindriques. Il en résulte également que les pinces mobiles 17 ne peuvent pas venir en contact lorsqu'elles enserrent une balle telle que la balle 22a de la fig. 4 alors que cette balle est disposée pour être tangente à des balles 22b et 22c reposant comme la balle 22 sur leurs surfaces planes et s'étendant suivant des coordonnées rectangulaires.

La longueur d'arc de cercle définie ci-dessus fait que les pinces fixes 15 qui s'étendent transversalement au bâti 14 ne peuvent pas non plus venir en contact avec la balle 22b de la fig. 4 lorsque la balle 22a est amenée dans une position pour laquelle elle tangente ladite balle 22b.

Par ailleurs, l'arc de cercle voisin de 270° que forment les jeux de pinces fixes 15 et les pinces mobiles 17 font que ces jeux de pinces enserrent les balles sur un arc de cercle permettant une prise efficace sans avoir à exercer une pression pouvant conduire à un endommagement du film plastique 21 recouvrant les balles.

Les balles 22, lorsqu'elles sont formées, reposent au sol sur certaines des génératrices du cylindre qu'elles constituent, ces balles étant comprimées et enveloppées dans un film plastique les enveloppant complètement.

Le dispositif décrit ci-dessus est alors amené dans la position illustrée en trait plein à la fig. 2 en alimentant le vérin 19 de pièce de travail 7 pour qu'il fasse ouvrir le jeu de pinces mobiles 17 qui sont amenées dans la position illustrée en traits mixtes à la fig. 4, position pour laquelle la distance séparant les extrémités $17_1$, desdites pinces mobiles des extrémités $15_1$ des pinces fixes est supérieure au diamètre de la balle 22. On fait alors pivoter la pièce de travail 7 en alimentant le vérin 13, ce qui fait basculer simultanément le bâti 14 et les pinces qu'il porte.

On abaisse ensuite les brancards 3 au moyen des vérins de levage 8 jusqu'au moment où les jeux de pinces 15 et 17 prennent appui sur la balle. le vérin 19 est alors alimenté de nouveau pour rapprocher les jeux de pinces mobiles du jeu de pinces fixes, c'est-à-dire pour amener les pinces mobiles de la position illustrée en $17_1$ à la fig. 4 jusqu'à la position illustrée en 17 à cette même figure. La balle est de cette façon saisie. L'opérateur commande alors à nouveau les vérins de levage 8 pour soulever la balle 22 puis le vérin 13 pour que la pièce de travail 7 et, par conséquent, les jeux de pinces pivotent d'environ 90° en venant occuper la position illustrée en traits mixtes à la fig. 2.

Les balles successives sont ensuite empilées comme illustré aux fig. I à 4 en agissant sur les vérins de levage 8, afin d'amener chaque balle à la hauteur désirée, et sur le vérin 19 commandant les jeux de pinces mobiles 17 pour libérer une balle mise en place ainsi que cela est illustré à la fig. 4 en ce qui concerne la balle 22a.

L'invention n'est pas limitée à l'exemple de réalisation, représenté et décrit en détail, car diverses modifications peuvent y être apportées sans sortir de son cadre.

En particulier, les plaques de revêtement 15a, 17a peuvent être montées de façon amovible pour permettre leur interchangeabilité s'il y a lieu de travailler, d'une part, des balles sous film plastique, ou, d'autre part, des balles nues ou d'autres objets de forme cylindrique ou sensiblement cylindrique tels que des fûts pour lesquels les plaques de revêtement 15a, 17a peuvent être réalisées en matière flexible, par exemple en élastomère.

## Revendications

1. Dispositif de retournement et gerbage d'objets de forme cylindrique tels que des balles de fourrage, des fûts ou analogues dans lequel lesdites balles (22) doivent être empilées sur leur face plane après avoir été relevées alors qu'elles se trouvaient indifféremment reposer sur leurs génératrices cylindriques ou leur face plane, caractérisé en ce que ledit dispositif de gerbage est porté par une pièce de travail (7) normalement maintenue de façon connue en elle-même dans une position d'assiette sensiblement constante lorsqu'elle est élevée respectivement abaissée par un ensemble élévateur (3) et pouvant être inclinée d'au moins 90° par des moyens de commande (11, 12, 13), et en ce que la pièce de travail (7) supporte un bâti (14) transversalement auquel sont disposées des pinces fixes (15) et au voisinage du pied dequelles sont articulées des pinces mobiles (17) reliées à des organes d'actionnement (19), lesdites pinces fixes (15) et mobiles (17) étant conformées en arc de cercle de rayon correspondant sensiblement à celui des balles (22).

2. Dispositif suivant la revendication 1, caractérisé en ce que les pinces mobiles (17) sont articulées sur un axe (16) disposé sur le bâti (14) latéralement par rapport à un des côtés latéraux de l'ensemble élévateur et sont commandées par un vérin (19) relié audit bâti (14) par une poutre latérale (20).

3. Dispositif suivant l'une des revendications 1 et 2, caractérisé en ce que les pinces fixes (15) et mobiles (17) s'étendent sur un arc de cercle d'approximativement 270° et sont calées sur le bâti (14) auquel elles sont reliées pour que leurs extrémités respectives ($15_1$, $17_1$) se trouvent distantes des points de tangence de deux balles contiguës disposées selon deux axes de coordonnées rectangulaires.

4. Dispositif suivant l'une des revendications 1 à 3, caractérisé en ce que les pinces fixes (15) et mobiles (17) présentent une forme en croissant.

5. Dispositif suivant l'une des revendications 1 à 4, caractérisé en ce que les pinces fixes (15) et mobiles (17) sont disposées par jeu et sont munies de plaques de revêtement (15a, 17a).

6. Dispositif suivant l'une des revendications 1 à 5, caractérisé en ce que les plaques de revêtement (15a, 17a) sont des plaques de friction ou des plaques flexibles.

7. Dispositif suivant l'une des revendications 1 à 6, caractérisé en ce que les plaques de revêtement (15a, 17a) sont disposées de façon amovible.

8. Dispositif suivant l'une des revendications 1 à 7, caractérisé en ce que l'ensemble de levage comporte des brancards (3) articulés à un tracteur agricole et dont l'extrémité libre porte une pièce de travail (7) dont l'assiette est maintenue constante par un vérin (13) alimenté à partir de vérins de compensation déplacés lors du mouvement des brancards (3) par des vérins de levage (8).

9. L'application du dispositif de l'une des revendications 1 à 8 au gerbage de balles de fourrage préalablement enveloppées sous pression sous un film en matière plastique et devant être stockées par empilage sur leur face plane.

# FIG. 1

EP 0 332 502 A2

FIG. 2

FIG. 3

FIG. 4